# EUROPÄISCHE PATENTSCHRIFT

(11) **EP 3 051 989 B1**
(45) Veröffentlichungstag und Bekanntmachung des Hinweises auf die Patenterteilung: **02.06.2021**
(21) Anmeldenummer: 14758974.1
(22) Anmeldetag: 05.09.2014
(51) Int. Cl.: A47J 43/044, A47J 43/06, A47J 43/07

(54) **VERFAHREN ZUR MONTAGE EINES WERKZEUGS FÜR EIN KÜCHENGERÄT UND WERKZEUG FÜR EIN KÜCHENGERÄT**
METHOD FOR FITTING A TOOL FOR A KITCHEN APPLIANCE AND TOOL FOR A KITCHEN APPLIANCE
PROCÉDÉ DE MONTAGE D'UN OUTIL POUR USTENSILE DE CUISINE ET OUTIL POUR USTENSILE DE CUISINE

(30) Priorität: 30.09.2013 DE 102013219836
(43) Veröffentlichungstag der Anmeldung: 10.08.2016
(73) Patentinhaber: BSH Hausgeräte GmbH, 81739 München (DE)
(72) Erfinder: DECMAN, Igor, 3232 Ponikva (SI); GOLAVSEK, Samo, 3312 Prebold (SI); ZLAUS, Uros, 3201 Smartno v Rozni dolini (SI); SEMEJA, Uros, 3327 Smartno ob Paki (SI)
(86) Internationale Anmeldenummer: PCT/EP2014/068916
(87) Internationale Veröffentlichungsnummer: WO 2015/043921

(56) Entgegenhaltungen:
- EP-A1- 1 529 472
- EP-A1- 1 772 087
- DE-T2- 69 826 868
- DE-U1-202006 020 003
- US-A- 3 166 255
- US-A- 3 333 830
- US-A1- 2005 128 865

## Beschreibung

### Gebiet der Erfindung

Die Erfindung betrifft ein Verfahren zur Montage eines Werkzeugs für ein Küchengerät, wobei eine Welle, über die im Betrieb mit dem Küchengerät ein Messer in Rotation versetzt werden kann, in einem Fußteil und einem Kopfteil des Werkzeugs gelagert wird und das Fußteil einen zur Aufnahme der Welle vorgesehenen Schaft umfasst und das Kopfteil eine Kupplung zum Kuppeln des Werkzeugs an das Küchengerät umfasst. Die Erfindung betrifft weiterhin ein Werkzeug für ein Küchengerät und außerdem ein Küchengerät.

### Hintergrund der Erfindung

Die deutsche Offenlegungsschrift DE 198 12 541 A1 offenbart eine glockenförmige Abschirmung für die Verwendung insbesondere in einem Stabmixer oder Handrührer, wobei die Abschirmung einen Raum bildet, in dem ein messerähnliches Arbeitswerkzeug angeordnet ist, das von einer Antriebswelle in Drehung versetzt werden kann. Die Oberfläche der Innenwand der Abschirmung weist an ihrem Umfang einzelne nach außen gerichtete Wandabschnitte zur Bildung von Freiräumen auf, die vorwiegend zur Umlenkung, Zerkleinerung und besseren Durchmischung sowie zur Aufnahme und Abfuhr von Nahrungsmitteln dienen.

Die deutsche Patentschrift DE 44 36 092 C1 offenbart ein Arbeitsgerät zum Rühren oder Zerkleinern von Nahrungsmitteln mit einer Arbeitswelle, die im Bereich eines Abtriebsendes zentrisch in einer in einem Wellengehäuse angeordneten Lagerhülse gelagert ist. Das Wellengehäuse geht im Bereich des Abtriebsendes in eine erweiterte Gehäuseglocke über, deren Innenraum zu einem Innenraum des Wellengehäuses hin durch eine Abdeckplatte getrennt ist. Durch einen umlaufenden Dichtring zwischen der Abdeckplatte und der Gehäuseglocke wird eine einfache Flüssigkeitsabdichtung erreicht.

Aus der europäischen Patentschrift EP 1 733 665 B1 ist eine lösbare Kupplungsvorrichtung zwischen einem Brech- und/oder Schlagarm und einem Motorblock bekannt. Der Brech- und/oder Schlagarm weist eine Kupplungsglocke mit einem innenliegenden Gewinde auf, womit der Brech- und/oder Schlagarm an den Motorblock geschraubt werden kann. Der Motorblock weist ein Gewindemittel auf, das ein Rückhalteteil umfasst durch das die Verschraubung in einer Position immobilisiert werden kann.

Die amerikanische Patenschrift US 6,193,404 B1 offenbart ein Handmixer zur Nahrungszubereitung, in dessen Gehäuse ein elektrischer Motor angeordnet ist. Der Motor treibt eine Welle an, die in einem Rohr gelagert ist. An dem Ende des Rohrs ist ein abnehmbares Endstück befestigt. Ein Ende der Welle dringt in einen Innenraum des Endstücks ein. An dem Ende der Welle ist ein Drehwerkzeug befestigt. An der Verbindung zwischen Rohr und Endstück ist eine Dichtung angeordnet, die das Rohr abdichtet.

Weitere Handmixer mit mehrteiligen Werkzeugen sind in der Offenlegungsschrift US 2005/128865 A1, sowie in der Patentschrift DE 698 26 868 A2 offenbart.

### Der Erfindung zugrunde liegende Aufgabe

Der Erfindung liegt die Aufgabe zugrunde ein gegenüber dem Stand der Technik verbessertes Verfahren zur Montage eines Werkzeugs für ein Küchengerät anzugeben. Durch das verbesserte Verfahren soll insbesondere eine vereinfachte und kostengünstigere Montage eines Werkzeugs ermöglicht werden. Außerdem soll ein verbessertes Werkzeug für ein Küchengerät sowie ein Küchengerät bereitgestellt werden.

### Erfindungsgemäße Lösung

Die Lösung der gestellten Aufgabe gelingt durch Angabe eines Verfahrens zur Montage eines Werkzeugs für ein Küchengerät, wobei eine Welle, über die im Betrieb mit dem Küchengerät ein Messer in Rotation versetzt werden kann, in einem Fußteil und einem Kopfteil des Werkzeugaufsatzes gelagert wird und das Fußteil einen zur Aufnahme der Welle vorgesehenen Schaft umfasst und das Kopfteil eine Kupplung zum Kuppeln des Werkzeugaufsatzes an das Küchengerät umfasst. Erfindungsgemäß werden in einem Verfahrensschritt das Fußteil und das Kopfteil durch eine Drehbewegung miteinander verbunden.

Durch die Erfindung kann vorteilhaft erreicht werden, dass bei der Montage eines Werkzeugs ein Fußteil und ein Kopfteil durch eine Drehbewegung miteinander verbunden werden. Dadurch kann das Verbinden besonders zuverlässig erfolgen, wodurch das Montageverfahren besonders einfach und damit zeit- und kostensparend wird.

Ein erfindungsgemäßes Werkzeug kann zum Vermischen, Pürieren, Häckseln und/oder Zerschneiden eines Guts, insbesondere von Nahrungsmitteln, die weitestgehend fest und/oder flüssig sein können verwendbar sein. Beispielhafte Verwendungen umfassen das Pürieren von Obst und/oder Gemüse, das Mischen von Flüssigkeiten oder das Aufschlagen von Eiweiß oder Milchprodukten. Ein Küchengerät kann ein Handgerät, insbesondere ein Stabmixer oder Handrührer sein. Küchengeräte sind elektrisch betreibbar und werden entweder von Batterien oder einem Netzkabel mit Energie versorgt.

Das Fußteil umfasst einen im Wesentlichen zylinderförmigen, länglichen Schaft, an dessen unterem Ende eine vom Schaft ausgehende, im Wesentlichen radial nach außen gerichtete Auskragung ausgeformt sein kann. Die Auskragung kann eine im Wesentlichen glocken- oder kegelähnliche Form aufweisen, die nach unten geöffnet ist und deren Form nicht rotationssymmetrisch sein muss. Die Auskragung unterteilt das Fußteil in einen Abschnitt, der im Wesentlichen aus dem Schaft besteht und einen Arbeitsraum. Der Arbeitsraum wird durch die Auskragung nach oben abgeschirmt. Die im Schaft gelagerte Welle ragt an ihrem unteren Ende in den Arbeitsraum hinein. An diesem unteren Ende der Welle ist ein im Wesentlichen quer zur Längsrichtung der Welle verlaufendes Messer angeordnet, das von der Welle in Rotation versetzt werden kann. Die Welle und das Messer rotieren im Betrieb des Küchengeräts um eine gemeinsame Drehachse, die in Längsrichtung des Schafts und meist entlang der Welle verläuft. Durch die Rotation des Messers kann in einem im Wesentlichen flüssigen Gut ein Wirbel entstehen. Die Auskragung dient dazu, eine in axialer Richtung verlaufenden Anteil der erzeugten Strömung umzulenken, um ein Herausspritzen des zu bearbeitenden Guts aus einem Gefäß zu minimieren oder zu verhindern. An einem der Auskragung entgegengesetzten Ende weist der Schaft ein Befestigungsmittel auf. Ein zum Befestigungsmittel des Fußteils passendes Gegenstück ist am Kopfteil angeordnet, so dass das Kopfteil durch eine Drehbewegung an dem Fußteil befestigt werden kann. Vor Ausführen der Drehbewegung kann eine Steckbewegung vonnöten sein, um die Befestigungsmittel des Kopfteils und des Fußteils in vorbereitenden Kontakt zueinander zu bringen, und in einem nächsten Schritt das Kopfteil und das Fußteil durch eine erfindungsgemäße Drehbewegung miteinander zu verbinden. Weiterhin kann das Kopfteil ein zweites Lager für die Welle umfassen, so dass die Welle sowohl im Kopfteil als auch im Fußteil gelagert ist. Außerdem weist das Kopfteil eine Kupplung auf, mittels derer das fertig zusammenmontierte Werkzeug an ein Küchengerät angekuppelt werden kann. Insbesondere wird dabei die Welle an eine Antriebseinheit im Küchengerät gekuppelt. Das Werkzeug kann entweder lösbar oder permanent an das Küchengerät kuppelbar sein.

Die der Erfindung zugrunde liegende Aufgabe wird außerdem gelöst durch Bereitstellen eines Werkzeug für ein Küchengerät gemäß Anspruch 4 der vorliegenden Patentschrift, umfassend ein Fußteil mit einer Auskragung und ein Kopfteil mit einer Kupplung zum Ankuppeln an das Küchengerät, wobei in einer durch das Kopfteil und das Fußteil verlaufenden Bohrung eine über die Kupplung in Drehung bringbare Welle gelagert ist, an deren fußseitigen Ende ein Messer angeordnet ist. Erfindungsgemäß sind das Kopfteil und das Fußteil durch einen Drehverschluss miteinander verbunden.

Die Lösung der gestellten Aufgabe gelingt außerdem durch Bereitstellen eines Küchengeräts, das ein vorgenanntes Werkzeug umfasst.

Erfindungsgemäß werden vor Verbinden des Kopfteils mit dem Fußteil durch eine Drehbewegung besagtes Kopfteil und Fußteil in einer Hülle ineinander gesteckt. Vorzugsweise werden das Kopfteil und das Fußteil vor dem Ineinanderstecken jeweils durch einander gegenüberliegende Öffnungen in die Hülle eingeführt. Besonders vorzugsweise werden das Kopfteil und das Fußteil weitestgehend von der Hülle umschlossen. Die Hülle ist vorzugsweise im Wesentlichen hantelförmig, besonders vorzugsweise im Innern hohl und nochmals besonders vorzugsweise weist die Hülle an beiden Enden Öffnungen auf. Erfindungsgemäß weist eine Hantelform zwei sich im Durchmesser monoton vergrößernde Enden auf, die durch einen zylinderförmigen Abschnitt verbunden sein können. Bei einer bevorzugten Hülle ist wenigstens eines der sich vergrößernden Enden als im Wesentlichen glocken- oder kelchförmige Abschirmung ausgeführt. Eine hantelförmige Hülle ist insbesondere nicht symmetrisch, das heißt, dass die Durchmesser der einander gegenüberliegenden Öffnungen unterschiedlich groß sein können. Außerdem kann eine Hantelform auch bezüglich einer Drehung um ihre Längsachse unsymmetrisch sein. Beispielsweise kann der zylindrische Abschnitt oder eine der Öffnungen einen ovalen oder anderweitig von einer Kreisform abweichenden Querschnitt aufweisen. Eine erfindungsgemäße Hantelform kann auch durch Kombination zweier entgegengesetzt aufeinander zulaufend gerichteter kegel- oder kegelabschnittförmigen Mantelflächen gebildet werden, beziehungsweise durch Einschnürung eines zwischen den Enden gelegenen Abschnitts einer zylindrischen Mantelfläche. Das Kopfteil und das Fußteil werden erfindungsgemäß jeweils in eine dazu vorgesehene Öffnung eingeführt und durch eine Drehbewegung miteinander verbunden, wodurch mindestens jeweils eine Kante und/oder Fläche des Kopfteils beziehungsweise des Fußteils an eine Innenfläche des Hülle zum Liegen kommen. So kann verhindert werden, dass das Kopfteil und das Fußteil ver- und/oder herausrutschen können. Vorzugsweise wird insbesondere das Fußteil auf der Seite der glocken- oder kelchförmigen Abschirmungen in die Hülle eingeführt, so dass die Auskragung des Fußteils im Innern der Abschirmung zum Liegen kommt, und somit als Auflage beziehungsweise als Anschlag dient und die Lage des Fußteils in der Hülle definiert.

Es ist bevorzugst, dass durch das Verschrauben des Kopfteils mit dem Fußteil im Innern der hantelförmigen Hülle die einander gegenüberliegenden Öffnungen der Hülle nach außen im Wesentlichen wasserdicht abgedichtet werden. Besonders vorzugsweise dichtet das Fußteil die Öffnung der Hülle auch gegen Eindringen von nicht-wässrigen Flüssigkeiten, beispielsweise Öl, ab. Durch das Abdichten der unteren Öffnung der Hülle kann vorteilhaft erreicht werden, dass ein Innenraum der Hülle vor Verschmutzung und Korrosion geschützt wird und außerdem eine Bildung von Bakterien im Inneren der Hülle verhindert wird. Besonders vorzugsweise wird die gegenüberliegende Öffnung der Hülle durch das Kopfteil abgedichtet. Besonders vorzugsweise weist die Auskragung des Fußteils eine Nut für einen Dichtungsring auf, der in Kontakt mit der Abschirmung der Hülle kommt und somit die Öffnung der Hülle abdichtet.

Es ist bevorzugt, dass durch das Verbinden des Kopfteils mit dem Fußteil im Innern der hantelförmigen Hülle, das Lager der Welle in der unteren Öffnung der Hülle zentriert wird. Hierbei kann "zentriert" auch so verstanden werden, dass das Lager beziehungsweise die Welle in eine Sollposition gebracht wird, die nicht notwendigerweise im Zentrum der Öffnung liegen muss. In einer bevorzugten Ausführung kann die Welle auch abseits der geometrischen Längsachse des Werkzeugs gelagert sein. Besonders vorzugsweise wird auch das kopfseitige Lager der Welle durch das Verbindungsverfahren zentriert. Nochmals besonders vorzugsweise wird die Welle durch beidseitiges Zentrieren der Lager entlang der Drehachse ausgerichtet. Vorzugsweise weicht die Position der Welle durch die Zentrierung der Lager um weniger als ein Millimeter in radialer Richtung von der Sollposition ab. Hierdurch kann vorteilhaft erreicht werden, dass insbesondere die Welle und das am unteren Ende der Welle angeordnete Messer korrekt ausgerichtet sind. Somit wird der Abstand des Messers insbesondere zu einer den Arbeitsraum umgebenden Wand der am fußseitigen Ende der Hülle ausgeformten Abschirmung sichergestellt.

In der erfindungsgemäßen Ausführung des Werkzeugs ist der Drehverschluss ein Gewinde. Besonders vorzugsweise weist der Schaft des Fußteils ein außenliegendes Gewinde und das Kopfteil ein Innenliegendes Gewinde auf. Ein bevorzugtes Gewinde ist ein Rechtsgewinde. Durch ein Gewinde kann vorteilhafterweise das Fußteil mit dem Kopfteil verbunden sein, wobei gleichzeitig eine Zugspannung zwischen Kopfteil und Fußteil vorhanden ist, die das Kopfteil und das Fußteil in einer Hülle fixiert. In einer alternativen Ausführung ist der Drehverschluss ein Bajonettverschluss.

Erfindungsgemäß umfassen das Fußteil und das Kopfteil eine dem Drehsinn des Gewindes entgegenwirkende Selbsthemmung. Eine bevorzugte Selbsthemmung ist eine Rasteinrichtung bestehend aus wenigstens einer Rastnase und einer Rastkontur. Vorzugsweise ist die Rastnase am Fußteil und die Rastkontur am Kopfteil angeordnet. Besonders vorzugsweise ist die Rastkontur innenliegend in einem zylindrischen Abschnitt des Kopfteils angeordnet und die Rastnase außenliegend am Schaft des Fußteils angeordnet. Der erreichbare Vorteil einer Selbsthemmung ist, dass der Drehverschluss sich nicht ungewollt öffnet kann. Insbesondere können beim Betrieb eines erfindungsgemäßen Werkzeugs Vibrationen auftreten, die ein selbsttätiges Lösen eines nicht gehemmten Verschlusses bewirken könnten. Die Selbsthemmung verhindert dies, wodurch ein erfindungsgemäßes Werkzeug ohne Verwendung zusätzlicher Befestigungsmittel wie zum Beispiel Schrauben oder Klebstoffe montiert sein kann.

In einer bevorzugten Ausführung des Werkzeugs sind das Kopfteil und das Fußteil von einer im Wesentlichen hantelförmigen Hülle umschlossen. Eine "hantelförmige Hülle" soll hier wie oben beschrieben verstanden werden. Eine bevorzugte Hülle schützt das Kopfteil und das Fußteil vor Verunreinigungen und mechanischer Beanspruchung.

Es ist bevorzugt, dass das Kopfteil und das Fußteil im Spritzgussverfahren hergestellt sind. Hiermit kann der Vorteil erreicht werden, dass das Kopfteil und das Fußteil kostengünstig in großen Stückzahlen mit gleichbleibenden, geringen mechanischen Toleranzen von typischerweise weniger als einem Millimeter hergestellt werden können. Durch geringe mechanische Toleranzen kann erreicht werden, dass das Kopfteil und das Fußteil optimal zueinander sowie zu den übrigen Bauteilen, wie zum Beispiel der Welle und der Hülle, passen.

Vorzugsweise ist die im Wesentlichen hantelförmige Hülle aus Metall gefertigt. Eine Hülle aus Metall ist vorteilhafterweise besonders robust gegenüber mechanischen Beanspruchungen und hat eine hochwertig anmutende Optik, welche sich positiv auf die Kaufentscheidung eines Benutzers auswirken kann. Besonders vorzugsweise ist die Hülle aus Edelstahl gefertigt. Eine Hülle aus Edelstahl hat den erreichbaren Vorteil, dass sie leicht zu reinigen, korrosionsbeständig und hygienisch ist. In einer alternativen Ausführung ist die Hülle aus Aluminium gefertigt, wodurch die Hülle kostengünstiger und leichter werden kann.

Es ist bevorzugt, dass die untere Öffnung der Hülle von dem Fußteil im Wesentlichen wasserdicht verschlossen ist. Es ist besonders bevorzugt, dass das Fußteil die Öffnung der Hülle auch gegen Eindringen von nicht-wässrigen Flüssigkeiten, beispielsweise Öl, abdichtet. Vorzugsweise weist das Fußteil eine Dichtung auf, die beispielsweise in einer Nut in dem Kelch des Fußteils befestigt werden kann. Eine bevorzugte Dichtung ist ein O-Ring. Alternativ kann auch eine Silikondichtung verwendet werden. In einer weiteren alternativen Ausführung dichtet das Fußteil ohne eine spezielle Dichtung im Kontakt mit der Hülle den Innenraum der Hülle im Wesentlichen wasserdicht ab. Durch das Abdichten der unteren Öffnung der Hülle kann vorteilhaft erreicht werden, dass ein Innenraum der Hülle vor Verschmutzung und Korrosion geschützt wird und außerdem eine Bildung von Bakterien im Inneren der Hülle verhindert wird. Besonders vorzugsweise wird die gegenüberliegende Öffnung der Hülle durch das Kopfteil abgedichtet.

In einem bevorzugten Werkzeug weisen das Kopfteil und das Fußteil jeweils Gleitlager auf. Die Gleitlager dienen zum Lagern der Welle, über die eine Rotation auf ein Messer übertragen wird. Ein bevorzugtes Gleitlager ist ein selbstschmierendes Gleitlager. Besonders bevorzugt ist ein Lager, das ohne Schmiermittel auskommt. Gleitlager haben den Vorteil, dass sie robust, einfach und kostengünstig sind.

Es ist bevorzugt, dass die Auskragung am unteren Ende des Fußteils als Kelch ausgeformt ist, der eine Innenwand aufweist, die einen Arbeitsraum umschließt. Ein bevorzugter Kelch ist im Wesentlichen glockenförmig oder hat die Form einer Kugelkalotte. Besonders vorzugsweise bildet die Innenwand des Kelches eine Abdeckung, die eine Innenwand einer Abschirmung einer Hülle bündig abschließt. Der Arbeitsraum ist der Bereich, in dem das Messer im Betrieb mit dem Küchengerät rotiert. Die Innenwand weist vorzugsweise Strukturen auf, die eine Strömung des zu bearbeitenden Guts, vorzugsweise Nahrungsmittel, so umlenken kann, dass eine durch einen Wirbel erzeugte Saugwirkung vermindert wird. Besonders vorzugsweise sind die Strukturen als vom Schaft ausgehende, im Wesentlichen radial nach außen verlaufenden Trennrippen ausgebildet, die den Arbeitsraum in Bereiche unterteilen, in denen eine Strömung in kleinere Wirbel aufgebrochen werden kann. Nochmals besonders vorzugweise weist die Innenwand des Kelches eine Vielzahl von Dimples auf. Die Dimples sind runde Vertiefungen, wie sie von der Oberfläche eines Golfballs bekannt sind. Die Dimples bewirken, ähnlich wie beim Golfball, dass die Dicke einer turbulenten Trennschicht zwischen Innenwand und dem flüssigen Gut verringert wird.

Ein bevorzugtes Werkzeug kann abnehmbar an ein Küchengerät angekuppelt werden. Ein bevorzugtes Küchengerät umfasst eine Antriebseinheit, die im Betrieb über eine Kupplung die im Schaft gelagerte Welle in Rotation versetzt. Eine bevorzugte Antriebseinheit ist elektromotorisch. Vorzugsweise wird das Werkzeug über die am Kopfteil angeordnete Kupplung an das Küchengerät gekuppelt. Eine bevorzugte Kupplung umfasst einen Verschlussmechanismus, der durch eine Drehung des Werkzeugs oder Betätigen eines Knopfes, der entweder am Küchengerät oder am Werkzeug angeordnet ist, entriegelbar ist. Ein vom Küchengerät lösbares Werkzeug hat den erreichbaren Vorteil, dass es leichter gereinigt werden kann. Außerdem kann somit das Küchengerät mit verschiedenen Werkzeugen kombinierbar sein. Das erfindungsgemäße Werkzeug kann außerdem als Zubehörteil für bereits verkaufte Küchengeräte angeboten werden. In einer alternativen Ausführung ist das Werkzeug fest mit einem Küchengerät verbunden und ist somit nicht abnehmbar.

### Kurzbeschreibung der Zeichnungen

Weitere vorteilhafte Ausgestaltungen werden nachfolgend anhand eines in den Zeichnungen dargestellten Ausführungsbeispiels, auf welches die Erfindung jedoch nicht beschränkt ist, näher beschrieben.

Es zeigen schematisch:
- Figur 1:: In Fig. 1 ist ein Ablauf von Verfahrensschritten zur Montage eines Werkzeugs dargestellt.
- Figur 2:: In Fig. 2 ist eine perspektivische Ansicht eines erfindungsgemäßen Fußteils und Kopfteils dargestellt.
- Figur 3:: Fig. 3 zeigt eine Schnittansicht durch die Längsachse im Bereich der Kupplung eines erfindungsgemäßen Werkzeugs.

### Ausführliche Beschreibung der Erfindung anhand von einem Ausführungsbeispiel

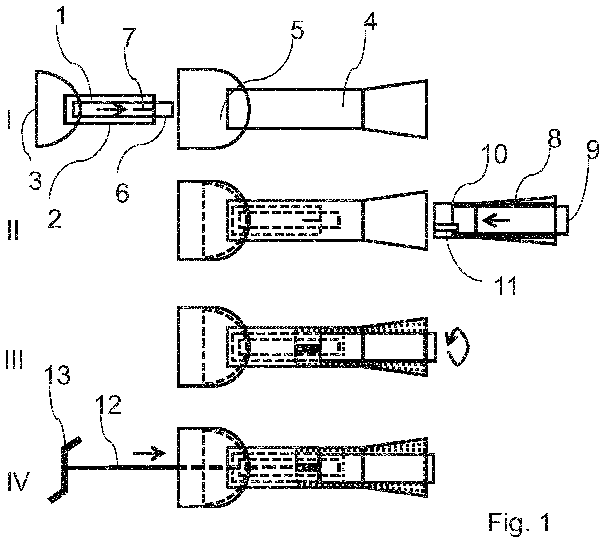

Anhand von Fig. 1 wird die erfindungsgemäße Montage eines Mixstabs, der als Werkzeugaufsatz zur Verwendung mit einem elektrisch betreibbaren Küchengerät vorgesehen ist, schematisch illustriert. In einem ersten Verfahrensschritt I wird zunächst ein Fußteil 1, das einen Schaft 2 und einen am Schaft 2 ausgeformten Kelch 3 umfasst, in eine hantelförmige Hülle 4 eingeführt, was durch einen Pfeil angedeutet ist. Dabei kommt die Außenfläche des Kelches 3 an der Innenseite einer glockenförmigen Abschirmung 5 der Hülle zum Liegen, wodurch die Position des Fußteils 1 in der Hülle zentriert wird. Eine nicht gezeigte Dichtung, die durch einen in einer Nut des Kelchs 3 liegenden O-Ring gebildet wird, dichtet dabei den Innenraum der Hülle 4 gegen Eindringen von Flüssigkeiten ab. Ein ebenfalls nicht gezeigtes Paar von Ausbuchtungen an der Innenwand der Abschirmung 5 greift in korrespondierende Nuten im Kelch 3 des Fußteils 1 und verhindert ein Verdrehen des Fußteils 1 in der Hülle 4. Das Fußteil 1 weist außerdem an einem dem Kelch 3 gegenüberliegenden Ende des Schafts 2 ein außenliegendes Gewinde 6 sowie eine zu einer Selbsthemmung gehörende Rastnase 7 auf.

In einem zweiten Verfahrensschritt II wird ein Kopfteil 8 durch eine der Abschirmung gegenüberliegenden Öffnung in die Hülle 4 eingeführt, was durch einen Pfeil angedeutet ist. Das Kopfteil 8 umfasst eine Kupplung 9 zum Ankuppeln des Mixstabs an das nicht gezeigte Küchengerät. Auf der gegenüberliegenden Seite der Kupplung 9, weist das Kopfteil 8 ein innenliegendes Gewinde 10 sowie eine Rastkontur 11 auf. Die konische Form der Oberfläche des Kopfteils 8 kommt im Innern der Hülle 4 auf einer entsprechenden konischen Innenfläche zum Liegen wodurch das Kopfteil 8 zentriert und auf das Gewinde 6 des Fußteils 1 ausgerichtet wird. Das Gewinde 10 sowie die Rastkontur 11 sind an der inneren Fläche eines zylindrischen Fortsatzes des Kopfteils 8 angeordnet, so dass das außenliegende Gewinde 6 des Fußteils 1 dort hineingeschraubt werden kann, wobei die Rastkontur 11 über die entsprechende am Schaft des Fußteils 1 angeordnete Rastnase 7 geschoben wird.

Durch eine Drehbewegung wird in einem dritten Verfahrensschritt III eine Verbindung zwischen dem Kopfteil 8 und dem Fußteil 1 hergestellt. Das Fußteil 1 ist wie zuvor erläutert in der Hülle 4 gegen Verdrehen gesichert. Daher wird die Verbindung zwischen Kopfteil 8 und Fußteil 1 durch Drehen am Kopfteil 8 hergestellt. Durch das Verschrauben, werden Kopfteil 8 und Fußteil 1 fest in der Hülle 4 eingeklemmt. Insbesondere das Kopfteil 8 weist eine konische Form auf die ein Verklemmen in der konischen Form der Hülle 4 begünstigt und dabei außerdem einen freien Innenraum der Hülle 4 nach außen abdichtet. Die an der Rastkontur 11 anliegende Rastnase 7 verhindert ein Zurückdrehen entgegen dem Drehsinn des Gewindes.

In einem vierten Verfahrensschritt IV wird eine Welle 12, an der ein Messer 13 angeordnet ist in eine zentrale durch das Fußteil 1 und das Kopfteil 8 führende Bohrung eingeschoben. An den außenliegenden Enden weisen das Kopfteil 8 und das Fußteil 1 außerdem Gleitlager auf, welche zum Lagern der Welle 12 vorgesehen sind. Das kopfseitige Ende der Welle 12 kann durch Ankuppeln des Mixstabs an das Küchengerät mit einer Antriebseinheit in Verbindung gebracht werden, so dass das Messer 13 über die Welle 12 in Drehung gebracht werden kann.

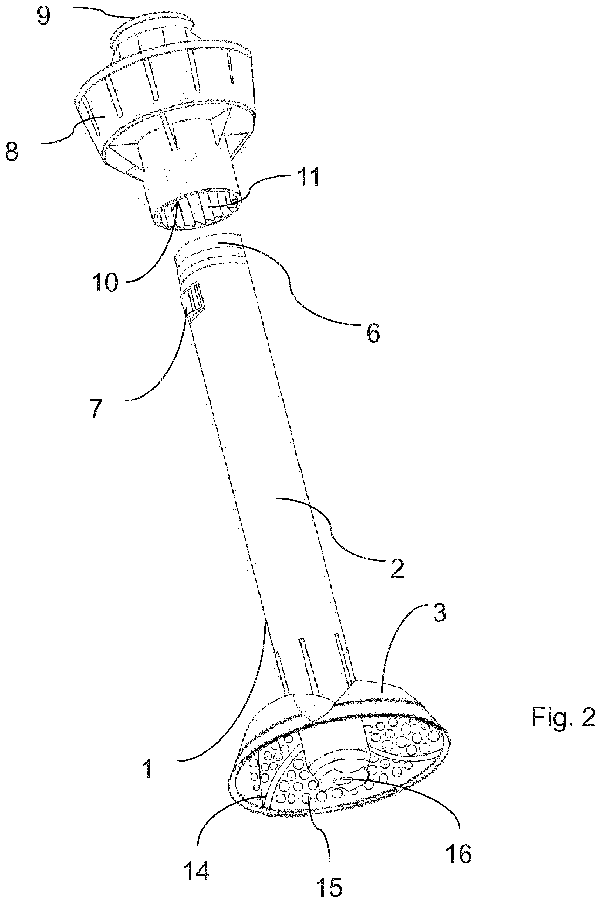

Fig. 2 zeigt eine perspektivische Ansicht eines erfindungsgemäßen Fußteils 1 und Kopfteils 8, die mit einem erfindungsgemäßen Verfahren wie anhand von Fig. 1 beschrieben miteinander verbunden werden können. In Fig. 2 sind weitere Details des Fußteils 1 und des Kopfteils 8 zu sehen. Am unteren Ende des Schafts 2 ist ein Kelch 3 ausgeformt, der eine Innenwand mit Trennrippen 14 aufweist. Außerdem ist an der Innenwand eine Vielzahl von Dimples 15 angeordnet. Dimples sind runde Vertiefungen, wie sie von der Oberfläche eines Golfballs bekannt sind. Die Dimples können vorteilhaft die Strömung eines weitgehend flüssigen zu bearbeitenden Guts beeinflussen. Durch eine in der Spitze des Fußteils beginnenden, durch das Fußteil 1 und das Kopfteil 8 verlaufende Bohrung 16 kann eine Welle in den Schaft 2 eingeführt werden. Das gezeigte Fußteil 1 ist aus Kunststoff im Spritzgussverfahren hergestellt. An der dem Kelch 3 gegenüberliegenden Seite des Schafts 2 weist das Fußteil 1 ein Gewinde 6 sowie eine Rastnase 7 auf. Eine zweite Rastnase ist in der Zeichnung nicht zu sehen, da sie sich auf der umfänglich der ersten Rastnase 7 gegenüberliegenden Seite des Schafts 2 befindet. Das Gewinde 6 dient zum Verbinden des Fußteils 1 mit dem Kopfteil 8, das ein innenliegendes Gewinde 10 sowie eine Rastkontur aufweist. Die Rastnasen 7 liegen nach Verschrauben des Fußteils 1 mit dem Kopfteil 8 an der Rastkontur 11 an und bilden eine Selbsthemmung. Die Selbsthemmung verhindert ein Lösen, sobald Kopfteil 8 und Fußteil 1 miteinander verschraubt sind. Das Kopfteil 8 weist außerdem eine Kupplung 9 auf, durch die das Kopfteil 8 an ein Küchengerät angekuppelt werden kann.

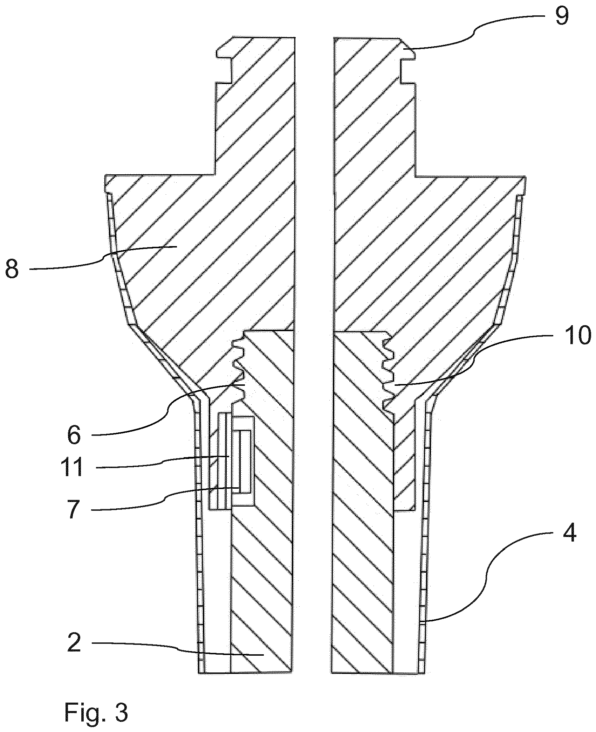

In Fig. 3 ist ein Schnitt durch die Längsachse eines erfindungsgemäßen Werkzeugs dargestellt. Gezeigt ist der Bereich in der Nähe des Kopfteils 8, wobei die Verschraubung zwischen dem Gewinde 6 des Fußteils 1 und dem Gewinde 10 des Kopfteils zu erkennen ist. Ein Lösen der beiden Teile wird durch eine Selbsthemmung bestehend aus einer Rastnase 7 und einer Rastkontur 11 verhindert. Durch die Schnittansicht wird eine in Längsrichtung verlaufende Bohrung 16 sichtbar, in die eine Welle eingeführt werden kann. Nicht dargestellt ist das kopfseitige Lager.

Die in der vorstehenden Beschreibung, den Ansprüchen und den Zeichnungen offenbarten Merkmale können sowohl einzeln als auch in beliebiger Kombination für die Verwirklichung der Erfindung in ihren verschiedenen Ausgestaltungen von Bedeutung sein.

### Bezugszeichenliste

- 1.: Fußteil
- 2.: Schaft
- 3.: Kelch
- 4.: Hülle
- 5.: Abschirmung
- 6.: Gewinde (des Fußteils)
- 7.: Rastnase
- 8.: Kopfteil
- 9.: Kupplung
- 10.: Gewinde (des Kopfteils)
- 11.: Rastkontur
- 12.: Welle
- 13.: Messer
- 14.: Trennrippe
- 15.: Dimple
- 16.: Bohrung

## Patentansprüche

1. Verfahren zur Montage eines Werkzeugs für ein Küchengerät, wobei eine Welle (12), über die im Betrieb mit dem Küchengerät ein Messer (13) in Rotation versetzt werden kann, in einem Fußteil (1) und einem Kopfteil (8) des Werkzeugs gelagert wird und das Fußteil (1) einen zur Aufnahme der Welle (12) vorgesehenen Schaft (2) umfasst und das Kopfteil (8) eine Kupplung (9) zum Kuppeln des Werkzeugs an das Küchengerät umfasst, wobei in einem Schritt des Verfahrens das Fußteil (1) und das Kopfteil (8) durch eine Drehbewegung miteinander verbunden werden, wobei vor Verbinden des Kopfteils (8) mit dem Fußteil (1) durch eine Drehbewegung, das Kopfteil (8) und das Fußteil (1) in einer Hülle (4) ineinander gesteckt werden, **dadurch gekennzeichnet, dass** das Fußteil (1) und das Kopfteil (8) durch ein Gewinde (6, 10) drehverschlossen werden und **dass** das Fußteil (1) und das Kopfteil (8) dem Drehsinn des Gewindes (6, 10) entgegenwirkend selbstgehemmt (7, 11) werden.

2. Verfahren nach Anspruch 1, **dadurch gekennzeichnet, dass** durch das Verschrauben des Kopfteils (8) mit dem Fußteil (1) im Innern der hantelförmigen Hülle (4) die einander gegenüberliegenden Öffnungen der Hülle (4) nach außen wasserdicht abgedichtet werden.

3. Verfahren nach Anspruch 1 oder 2, **dadurch gekennzeichnet, dass** durch das Verbinden des Kopfteils (8) mit dem Fußteil (1) im Innern der hantelförmigen Hülle, das Lager der Welle (12) in der unteren Öffnung der Hülle (4) zentriert wird.

4. Werkzeug für ein Küchengerät, umfassend ein Fußteil (1) mit einer Auskragung (3) und ein Kopfteil (8) mit einer Kupplung zum Ankuppeln an das Küchengerät, wobei in einer durch das Kopfteil (8) und das Fußteil (1) verlaufenden Bohrung (16) eine in Drehung bringbare Welle (12) gelagert ist, an deren fußseitigen Ende ein Messer (13) angeordnet ist, wobei das Kopfteil (8) und das Fußteil (1) durch einen Drehverschluss miteinander verbunden sind, wobei das Kopfteils (8) mit dem Fußteil (1) durch eine Drehbewegung in einer Hülle (4) ineinander steckbar sind, **dadurch gekennzeichnet, dass** der Drehverschluss ein Gewinde (6, 10) ist und das Fußteil (1) und das Kopfteil (8) eine dem Drehsinn des Gewindes (6, 10) entgegenwirkende Selbsthemmung (7, 11) umfassen.

5. Werkzeug dem Anspruch 4, **dadurch gekennzeichnet, dass** das Kopfteil (8) und das Fußteil (1) von einer im Wesentlichen hantelförmigen Hülle (4) umschlossen sind.

6. Werkzeug nach einem der Ansprüche 4 bis 5, **dadurch gekennzeichnet, dass** das Kopfteil (8) und das Fußteil (1) jeweils im Spritzgussverfahren hergestellt sind.

7. Werkzeug nach Anspruch 5 oder 6, **dadurch gekennzeichnet, dass** die im Wesentlichen hantelförmige Hülle (4) aus Metall gefertigt ist.

8. Werkzeug nach einem der Ansprüche 5 bis 7, **dadurch gekennzeichnet, dass** die untere Öffnung der Hülle (4) von dem Fußteil (1) wasserdicht verschlossen ist.

9. Werkzeug nach einem der Ansprüche 4 bis 8, **dadurch gekennzeichnet, dass** das Kopfteil (8) und das Fußteil (1) jeweils ein Gleitlager aufweisen.

10. Werkzeug nach einem der Ansprüche 4 bis 9, **dadurch gekennzeichnet, dass** die Auskragung am unteren Ende des Fußteil (1) als Kelch (3) ausgeformt ist, der eine Innenwand aufweist, die einen Arbeitsraum umschließt

11. Werkzeug nach einem der Ansprüche 4 bis 10, **dadurch gekennzeichnet, dass** das Werkzeug abnehmbar an ein Küchengerät angekuppelt werden kann.

12. Küchengerät, **dadurch gekennzeichnet, dass das** Küchengerät einen Werkzeug nach einem der Ansprüche 4 bis 11 umfasst.

## Claims

1. Method for assembling a tool for a kitchen appliance, wherein a shaft (12), via which a blade (13) can be made to rotate when operated with the kitchen appliance, is mounted in a foot part (1) and a head part (8) of the tool and the foot part (1) comprises a stem (2) provided for accommodating the shaft (12) and the head part (8) comprises a coupling (9) for coupling the tool to the kitchen appliance, wherein, in one step of the method, the foot part (1) and the head part (8) are interconnected by a rotary movement, wherein, before the head part (8) is connected to the foot part (1) by a rotary movement, the head part (8) and the foot part (1) are plugged into one another in a shell (4), **characterised in that** the foot part (1) and the head part (8) are rotary-closed by a thread (6, 10) and **that** the foot part (1) and the head part (8) are self-locking (7, 11) counter to the direction of rotation of the thread (6, 10).

2. Method according to claim 1, **characterised in that,** by screwing the head part (8) to the foot part (1) inside the dumbbell-shaped shell (4), the openings of the shell (4), which are opposite one another, are sealed off from the outside in a watertight manner.

3. Method according to claim 1 or 2, **characterised in that,** by connecting the head part (8) to the foot part (1) inside the dumbbell-shaped shell, the bearing of the shaft (12) is centred in the lower opening of the shell (4).

4. Tool for a kitchen appliance, comprising a foot part (1) with a projection (3) and a head part (8) with a coupling for coupling to the kitchen appliance, wherein mounted in a bore hole (16) running through the head part (8) and the foot part (1) is a shaft (12), which can be made to rotate and at the foot-side end of which a blade (13) is arranged, wherein the head part (8) and the foot part (1) are interconnected by a rotary closure, wherein the head part (8) can be plugged into the foot part (1) by way of a rotary movement in a shell (4), **characterised in that** the rotary closure is a thread (6, 10) and the foot part (1) and the head part (8) comprise a self-locking mechanism (7, 11) counter to the direction of rotation of the thread (6, 10).

5. Tool according to claim 4, **characterised in that** the head part (8) and the foot part (1) are surrounded by a substantially dumbbell-shaped shell (4).

6. Tool according to one of claims 4 to 5, **characterised in that** the head part (8) and the foot part (1) are each produced in an injection moulding method.

7. Tool according to claim 5 or 6, **characterised in that** the substantially dumbbell-shaped shell (4) is manufactured from metal.

8. Tool according to one of claims 5 to 7, **characterised in that** the lower opening of the shell (4) is closed off from the foot part (1) in a water-tight manner.

9. Tool according to one of claims 4 to 8, **characterised in that** the head part (8) and the foot part (1) each have a slide bearing.

10. Tool according to one of claims 4 to 9, **characterised in that** the projection at the lower end of the foot part (1) is shaped as a cup (3), which has an inner wall that surrounds a working space.

11. Tool according to one of claims 4 to 10, **characterised in that** the tool can be coupled to a kitchen appliance in a detachable manner.

12. Kitchen appliance, **characterised in that** the kitchen appliance comprises a tool according to one of claims 4 to 11.

## Revendications

1. Procédé de montage d'un accessoire pour un appareil de cuisine, dans lequel un arbre (12), par l'intermédiaire duquel, durant le fonctionnement de l'appareil de cuisine, un couteau (13) peut être déplacé en rotation, est logé dans une partie de pied (1) et une partie de tête (8) de l'accessoire et la partie de pied (1) comprend une douille (2) configurée pour recevoir l'arbre (12) et la partie de tête (8) comprend un accouplement (9) pour accoupler l'accessoire à l'appareil de cuisine, dans lequel, dans une étape du procédé la partie de pied (1) et la partie de tête (8) sont assemblées l'une à l'autre par un mouvement rotatif, dans lequel avant d'assembler la partie de tête (8) à la partie de pied (1) par un mouvement rotatif, la partie de tête (8) et la partie de pied (1) sont insérées l'une dans l'autre dans un fourreau (4), **caractérisé en ce que** la partie de pied (1) et la partie de tête (8) sont verrouillées par rotation au moyen d'un filetage (6, 10) et **en ce que** la partie de pied (1) et la partie de tête (8) sont autobloquées (7, 11) de façon à s'opposer au sens de rotation du filetage (6, 10).

2. Procédé selon la revendication 1, **caractérisé en ce que**, par le vissage de la partie de tête (8) à la partie de pied (1) à l'intérieur du fourreau (4) en forme d'haltère, les ouvertures opposées du fourreau (4) sont rendues étanches à l'eau vers l'extérieur.

3. Procédé selon la revendication 1 ou 2, **caractérisé en ce que**, par l'assemblage de la partie de tête (8) à la partie de pied (1) à l'intérieur du fourreau en forme d'haltère, le palier de l'arbre (12) est centré dans l'ouverture inférieure du fourreau (4).

4. Accessoire pour un appareil de cuisine, comprenant une partie de pied (1) comportant une saillie (3) et une partie de tête (8) comportant un accouplement pour accoupler à l'appareil de cuisine, dans lequel, dans un alésage (16) s'étendant à travers la partie de tête (8) et la partie de pied (1), un arbre (12) pouvant être mis en rotation est logé, à l'extrémité inférieure duquel un couteau (13) est disposé, dans lequel la partie de tête (8) et la partie de pied (1) sont assemblées l'une à l'autre par une fermeture rotative, dans lequel la partie de tête (8) et la partie de pied (1) peuvent être insérées l'une dans l'autre dans un fourreau (4) par un mouvement rotatif, **caractérisé en ce que** la fermeture rotative est un filetage (6, 10) et la partie de pied (1) et la partie de tête (8) comprennent un auto-bloquage (7, 11) s'opposant au sens de rotation du filetage (6, 10).

5. Accessoire selon la revendication 4, **caractérisé en ce que** la partie de tête (8) et la partie de pied (1) sont enserrées par un fourreau (4) essentiellement en forme d'haltère.

6. Accessoire selon l'une des revendications 4 à 5, **caractérisé en ce que** la partie de tête (8) et la partie de pied (1) sont fabriquées chacune par un procédé de moulage par injection.

7. Accessoire selon la revendication 5 ou 6, **caractérisé en ce que** le fourreau (4) essentiellement en forme d'haltère est fabriqué en métal.

8. Accessoire selon l'une des revendications 5 à 7, **caractérisé en ce que** l'ouverture inférieure du fourreau (4) est obturée de façon étanche à l'eau par la partie de pied (1).

9. Accessoire selon l'une des revendications 4 à 8, **caractérisé en ce que** la partie de tête (8) et la partie de pied (1) comprennent chacune un palier lisse.

10. Accessoire selon l'une des revendications 4 à 9, **caractérisé en ce que** la saillie à l'extrémité inférieure de la partie de pied (1) est réalisée sous forme de calice qui comprend une paroi intérieure, qui entoure un espace de travail.

11. Accessoire selon l'une des revendications 4 à 10, **caractérisé en ce que** l'accessoire peut être accouplé de façon détachable à un appareil de cuisine.

12. Appareil de cuisine, **caractérisé en ce que** l'appareil de cuisine comprend un accessoire selon l'une des revendications 4 à 11.
